(19) Europäisches Patentamt
European Patent Office
Office européen des brevets

(11) EP 0 802 466 A2

(12) EUROPÄISCHE PATENTANMELDUNG

(43) Veröffentlichungstag:
22.10.1997 Patentblatt 1997/43

(51) Int. Cl.⁶: **G05B 19/404**

(21) Anmeldenummer: 97101323.0

(22) Anmeldetag: 29.01.1997

(84) Benannte Vertragsstaaten:
DE ES FR GB IT

(30) Priorität: 20.04.1996 DE 19615816

(71) Anmelder: Chiron-Werke GmbH & Co. KG
78532 Tuttlingen (DE)

(72) Erfinder: Schweizer, Anton
78573 Wurmlingen (DE)

(74) Vertreter: Otten, Hajo, Dr.-Ing. et al
Witte, Weller, Gahlert, Otten & Steil,
Patentanwälte,
Rotebühlstrasse 121
70178 Stuttgart (DE)

(54) **Verfahren zum Steuern einer Werkzeugmaschine**

(57) Es wird ein Verfahren zum Steuern einer Werkzeugmaschine (10) beschrieben, die eine mit einer variablen Drehzahl (n) um eine Spindelachse (15) rotierende Spindel (14) aufweist. Die Spindel (14) trägt einen Plandrehkopf (16), der mit einem Werkstück (17, 17') bestückt ist, dessen radialer Abstand (V) zu der Spindelachse (15) über eine Steuerung (13) verstellbar ist. In Abhängigkeit von einer mit dem Werkstück (17, 17') durchzuführenden Bearbeitung werden der Abstand (V) und/oder die Drehzahl (n) verändert. Zur Erzielung eines gewünschten Abstandes ($V_{ist}$) wird von der Steuerung (13) ein Soll-Wert ($V_{soll}$) vorgegeben, der um einen Korrekturwert kleiner ist als der gewünschte Abstand ($V_{ist}$), wobei der Korrekturwert in Abhängigkeit von dem gewünschten Abstand ($V_{ist}$) und der Drehzahl (n) berechnet wird.

Fig. 1

EP 0 802 466 A2

## Beschreibung

Die vorliegende Erfindung betrifft ein Verfahren zum Steuern einer Werkzeugmaschine, die eine mit einer variablen Drehzahl um eine Spindelachse rotierende Spindel aufweist, die einen Plandrehkopf trägt, der mit einem Werkzeug bestückt ist, dessen radialer Abstand zu der Spindelachse über eine Steuerung verstellbar ist, wobei in Abhängigkeit von einer mit dem Werkzeug durchzuführenden Bearbeitung der Abstand und/oder die Drehzahl verändert werden.

Derartige Werkzeugmaschinen mit Plandrehköpfen sind aus dem Stand der Technik bekannt.

Unter Aus- oder Plandrehköpfen versteht man Anordnungen, mit denen es z.B. möglich ist, größere Oberflächen von Werkstücken planzudrehen. Die Besonderheit bei diesen Plandrehköpfen besteht dabei darin, daß ein Plandrehwerkzeug in radialer Richtung zu der Spindelachse verstellt werden kann, so daß der Drehdurchmesser variabel ist. Auf diese Weise erhält man bei numerisch gesteuerten Werkzeugmaschinen eine weitere numerische Achse.

Der Plandrehkopf ist dabei fest mit der Spindel verbunden, so daß er sich mit der Spindel mitdreht. Je nach durchzuführender Bearbeitung sitzt in dem Plandrehkopf ein anderes Werkzeug, das mit einer bestimmten Drehzahl der Spindel betrieben wird, wobei der radiale Abstand dieses Werkzeuges zu der Spindelachse in der Regel während der Bearbeitung verändert wird, so daß sich der Flugkreis des Werkzeuges um die Spindelachse herum entsprechend verändert.

In dem Plandrehkopf sind zur radialen Verstellung des Werkzeuges z.B. Schrägverzahnungen vorgesehen, die durch die Spindelachse hindurch über einen von dem Spindelantrieb verschiedenen Verstellmotor betätigt werden. Dabei ist das Werkzeug in der Regel in einem Schlitten aufgenommen, der über die Schrägverzahnung radial verstellt wird. Zur Kompensation der dadurch auftretenden Unwucht ist häufig eine Ausgleichsmasse vorgesehen, die in entsprechend entgegengesetzte Richtung verschoben wird.

Es hat sich nun herausgestellt, daß der Flugkreis des Werkzeuges um die Spindelachse herum aufgrund der wirkenden Fliehkräfte sowie anderer Einflüsse von dem über die Steuerung eingestellten Abstand abweicht, so daß es zu daraus resultierenden Bearbeitungsungenauigkeiten kommt.

Die sich so ergebenenden Maßabweichungen werden im Stand der Technik dadurch kompensiert, daß zunächst Probestücke des mit der Werkzeugmaschine in Serie zu fertigenden Werkstückes hergestellt werden, an denen die Maßabweichungen erfaßt werden. Daraufhin werden die über die Steuerung eingestellten Vorgaben für die Abstände entsprechend korrigiert, woraufhin ein neues Probestück bearbeitet wird. Dieses Verfahren wird iterativ solange durchgeführt, bis bei dem bearbeiteten Werkstück eine ausreichende Maßhaltigkeit erreicht wird. Mit den so gewonnenen Vorgabewerten werden dann die Werkstücke in Serie gefertigt.

Bei diesem Verfahren ist von Nachteil, daß es wegen der iterativen Suche nach den richtigen Vorgabewerten sehr zeitaufwendig ist. Ein weiterer Nachteil liegt darin, daß dieses Verfahren für jede neue Werkstückgeometrie neu durchgeführt werden muß.

Vor diesem Hintergrund ist es Aufgabe der vorliegenden Erfindung, das eingangs genannte Verfahren dahingehend weiterzubilden, daß die sich auf die Maßhaltigkeit negativ auswirkenden Einflüsse auf einfache und schnelle Weise kompensiert werden können.

Erfindungsgemäß wird diese Aufgabe bei dem eingangs genannten Verfahren dadurch gelöst, daß zur Erzielung eines gewünschten Abstandes von der Steuerung ein Soll-Wert vorgegeben wird, der um einen Korrekturwert kleiner ist als der gewünschte Abstand, wobei der Korrekturwert in Abhängigkeit von dem gewünschten Abstand und der Drehzahl berechnet wird.

Die der Erfindung zugrundeliegende Aufgabe wird auf diese Weise vollkommen gelöst.

Der Erfinder der vorliegenden Anmeldung hat nämlich erkannt, daß es möglich ist, einen formelmäßigen Zusammenhang zwischen dem Korrekturwert, dem gewünschten Abstand und der aktuellen Drehzahl herzustellen, so daß die Steuerung selbst aus dem gewünschten Abstand und der einzustellenden Drehzahl den vorzugebenden Soll-Wert berechnen kann, um den das Werkzeug aus der Spindelachse herausbewegt werden muß.

Dabei ist es bevorzugt, wenn der Korrekturwert in Abhängigkeit von dem Quadrat der Drehzahl berechnet wird, wobei der Korrekturwert vorzugsweise nach folgender Formel berechnet wird:

$$\Delta V = c \cdot n^2 \cdot V_{ist},$$

wobei c eine Maschinenkonstante ist.

Der Erfinder der vorliegenden Anmeldung hat gefunden, daß diese lineare Beziehung hinreichend ist, um einen Korrekturwert zu berechnen, der dann lediglich noch von dem gewünschten Abstand $V_{ist}$ abgezogen werden muß, um zu dem Soll-Wert zu gelangen, den die Steuerung einstellen muß. Insbesondere durch die lineare Abhängigkeit des Korrekturwertes $\Delta V$ vom Quadrat der Drehzahl der Spindel und damit des Plandrehkopfes um die Spindelachse ergibt sich eine sehr gute Näherung, die für unterschiedliche Drehzahlen der Spindel zu einem sehr genauen Einstellen des gewünschten Abstandes $V_{ist}$ führt.

Es wurde nämlich erkannt, daß insbesondere die Drehzahl der Spindel einen starken Einfluß auf die sich ergebenden Abweichungen von dem Soll-Wert hat. Obwohl die Spindel der Werkzeugmaschine sowie der von dieser getragene Plandrehkopf ein mechanisch sehr kompliziertes System darstellen, läßt sich dieses System dennoch bezüglich der Abweichungen des Flugbahndurchmessers auf die oben beschriebene einfache Weise beschreiben. Es wurde gefunden, daß in der Maschinenkonstante c sämtliche anderen Parameter der Werkzeugmaschine für diesen Zweck zusammengefaßt werden können, wobei die Maschinenkonstante c - wie ihr Name schon aussagt - für eine gegebene Werkzeugmaschine mit einem gegebenen Plandrehkopf für die angestrebte Genauigkeit als konstant angenommen werden kann.

Erste Versuche bei der Anmelderin haben gezeigt, daß sich durch Anwendung des insoweit beschriebenen Verfahrens die gewünschten Abstände auf genauer als 1/10 mm einstellen lassen. Es sollte hier noch bemerkt werden, daß bei unkompensierten Werkzeugmaschinen die Abweichungen zwischen dem Soll-Wert und dem sich tatsächlich einstellenden Abstand mehrere 1/10 mm betragen können.

In einer Weiterbildung ist es dann bevorzugt, wenn der Soll-Wert zusätzlich um einen weiteren, konstanten Korrekturfaktor verringert wird, der dem Umkehrspiel beim Verstellen des Werkzeuges entspricht.

Hier ist von Vorteil, daß die Maßhaltigkeit noch weiter erhöht werden kann, es hat sich nämlich herausgestellt, daß das Umkehrspiel, also die Abweichungen, die sich ergeben, wenn das Werkzeug von innen nach außen bzw. von außen nach innen auf einen bestimmten Abstand eingestellt wird, durch unterschiedliche Drehzahlen oder den Absolutbetrag des Soll-Wertes nicht merklich beeinflußt wird.

Durch diese zusätzliche Maßnahme läßt sich der gewünschte Abstand jetzt auf einige 1/100 mm einstellen, das neue Verfahren ermöglicht also ein deutlich genaueres Arbeiten mit der an sich bekannten Werkzeugmaschine, als dies bisher möglich war.

Dabei ist es weiter bevorzugt, wenn die Maschinenkonstante und/oder das Umkehrspiel vor Aufnahme der Bearbeitung durch das Werkzeug einmalig aus einer Testmessung bestimmt wird, wobei die Testmessung vorzugsweise in einer Testreihe durchgeführt wird, bei der für unterschiedliche Drehzahlen für verschiedene Abstände der erforderliche Soll-Wert bestimmt wird.

Hier ist von Vorteil, daß eine mit einem bestimmten Plandrehkopf bestückte Werkzeugmaschine lediglich einmal einer Testmessung unterzogen werden muß, bei der sowohl das Umkehrspiel des Plandrehkopfes als auch die Maschinenkonstakte c bestimmt werden. Nachdem diese Werte einmal bestimmt wurden, können sie in die Steuerung der Werkzeugmaschine einprogrammiert werden, wo sie dann bei dem radialen Verstellen des Werkzeuges so berücksichtigt werden, wie dies oben beschrieben wurde. Die Steuerung entnimmt aus dem Programm für das jeweils zu fertigende Werkzeug den gewünschten radialen Abstand sowie die erforderliche Drehzahl der Spindel und berechnet daraus mit Hilfe der Maschinenkonstante c sowie unter Berücksichtigung des Umkehrspieles den Soll-Wert, den sie an die Werkzeugmaschine weitergeben muß. Dieser Soll-Wert ist um den Korrekturfaktor $\Delta V$ sowie das Umkehrspiel $V_0$ kleiner als der gewünschte Abstand.

Wenn jetzt ein anderes Werkstück bearbeitet werden soll, oder mit einer anderen Drehzahl gearbeitet werden muß, so sind keine neuen Messungen durchzuführen, wie dies beim Stand der Technik der Fall war. Vielmehr wird aus den einmal für die mit einem Plandrehkopf bestückte Werkzeugmaschine bestimmten Werten für die Maschinenkonstante c sowie das Umkehrspiel $V_0$ für jeden gewünschten radialen Abstand der vorzugebende Soll-Wert individuell berechnet. Da diese Rechnung einfache Multiplikationen sowie Subtraktionen erfordert, kann sie sehr schnell durchgeführt werden, so daß die Steuerung diese Berechnungen in Echtzeit durchführen kann.

Von besonderem Vorteil bei dem insoweit beschriebenen neuen Verfahren ist also, daß auf das aus dem Stand der Technik bekannte, mühselige iterative "Einfahren" eines jeden neuen Werkstückes verzichtet werden kann.

Der Erfinder hat weiter erkannt, daß das neue Verfahren auch bei Werkzeugmaschinen anwendbar ist, bei denen die Werkstücke an dem Plandrehkopf entweder manuell oder automatisch ausgewechselt werden. Die einzelnen Werkzeuge sind nämlich bezüglich ihrer Masse genau auf den jeweiligen Plandrehkopf abgestimmt, so daß es für das insoweit beschriebene neue Kompensationsverfahren unerheblich ist, welches Werkzeug sich gerade in dem Plandrehkopf befindet, es muß lediglich für diesen Plandrehkopf ausgelegt sein.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der beigefügten Zeichnung dargestellt und wird in der nachfolgenden Beschreibung näher erläutert. Es zeigen:

Fig. 1     in einer schematischen, ausschnittsweisen Seitenansicht eine mit einem Plandrehkopf bestückte Werkzeugmaschine; und

Fig. 2     ein Meßdiagramm, das für unterschiedliche Drehzahlen bei einem umkompensierten Verfahren die Abweichungen zwischen dem sich einstellenden Abstand $V_{ist}$ sowie dem vorgegebenen Abstand $V_{soll}$ zeigt, wobei ferner diese Abhängigkeit auch für ein kompensiertes Verfahren gezeigt ist.

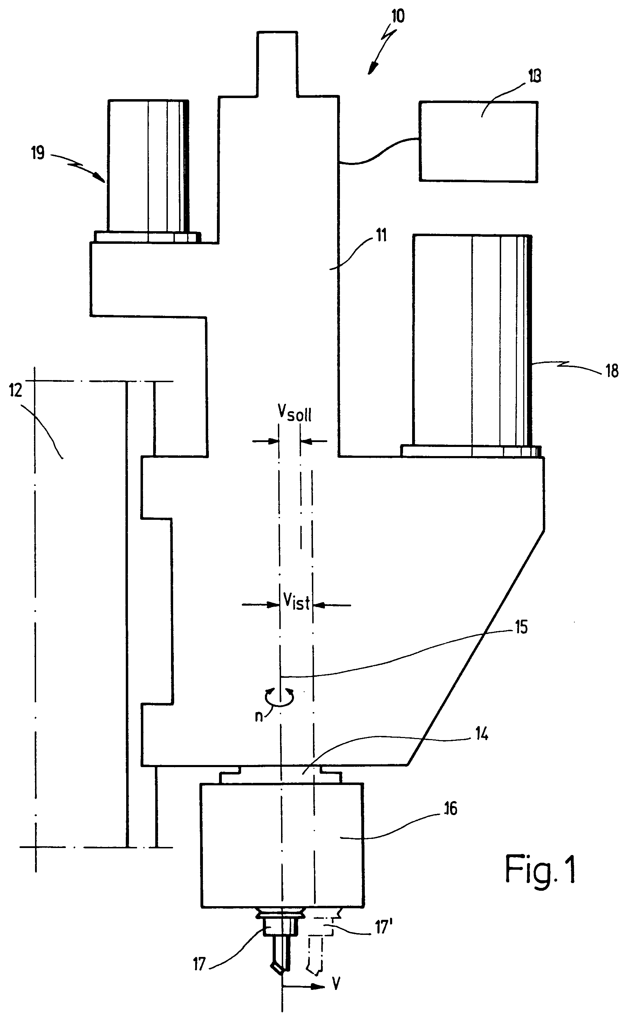

In Fig. 1 ist mit 10 allgemein eine ausschnittsweise dargestellte Werkzeugmaschine bezeichnet, die einen Spindelstock 11 umfaßt, der an einem Maschinengestell 12 in bekannter Weise verfahrbar ist. Ferner umfaßt die Werkzeugmaschine 10 eine schematisch angedeutete Steuerung 13, über die die einzelnen Abläufe bei der Werkzeugmaschine 10 gesteuert werden.

In dem Spindelstock 11 ist eine Spindel 14 um eine Spindelachse 15 drehbar angeordnet, wobei die Spindel 14 mit variablen Drehzahlen n um die Spindelachse 15 rotieren kann. Die Drehzahl n wird von der Steuerung 13 vorgegeben.

Die Spindel 14 trägt an ihrem unteren Ende einen an sich bekannten Plandrehkopf 16, der mit einem Werkzeug 17 bestückt ist, das in der in Fig. 1 gezeigten Stellung in der Spindelachse 15 liegt. Bei 17' ist ein Werkzeug gezeigt, das radial aus der Spindelachse nach außen gefahren wurde und einen Abstand V zu der Spindelachse 15 aufweist.

In Fig. 1 ist ferner ein Spindelmotor 18 gezeigt, über den die Spindel 14 und damit der Plandrehkopf 16 in Rotation versetzt wird. Ferner ist ein Verstellmotor 19 zu erkennen, über den von der Steuerung 13 gesteuert das Werkzeug 17 radial verfahren werden kann.

Wegen der Fliehkräfte, die bei einem außerhalb der Spindelachse 15 angeordneten Werkzeug 17' wirken, ist der Radius $V_{ist}$ des Flugkreises des Werkzeuges 17' um die Spindelachse 15 herum größer als der von der Steuerung 13 eingestellte Wert $V_{soll}$.

Die in Fig. 1 beschriebene Werkzeugmaschine 10 wird jetzt so gesteuert, daß bei einem gewünschten Abstand $V_{ist}$ ein entsprechend kleinerer Abstand $V_{soll}$ vorgegeben wird, wobei $V_{soll}$ in Abhängigkeit von $V_{ist}$ sowie der Drehzahl n wie folgt berechnet wird:

$$V_{soll} = V_{ist} - \Delta V - V_0,$$

wobei:

$V_{ist} =$ gewünschter radialer Abstand; realer Wert
$V_{soll} =$ vorzugebender Abstand, Soll-Wert der Steuerung
$\Delta V =$ Korrekturwert
$V_0 =$ Umkehrspiel.

Für den Korrekturwert $\Delta V$ gilt dabei folgender Zusammenhang:

$$\Delta V = c \cdot n^2 \cdot V_{ist},$$

wobei:

$c =$ Maschinenkonstante
$n =$ Drehzahl der Spindel 14.

Das Umkehrspiel $V_0$ ist die Abweichung, die sich ergibt, wenn ein gewünschter Abstand einmal radial von innen nach außen und zum anderen radial von außen nach innen eingestellt wird.

Der Erfinder der vorliegenden Anmeldung hat erkannt, daß für eine gegebene Werkzeugmaschine, die mit einem gegebenen Plandrehkopf bestückt ist, die Maschinenkonstante c sowie das Umkehrspiel $V_0$ im Rahmen der gewünschten Genauigkeit als Konstanten angenommen werden können, so daß sich aufgrund der obigen Formeln der Soll-Wert der Steuerung für einen gegebenen, gewünschten Abstand $V_{ist}$ wie folgt

ausrechnen läßt:

$$V_{soll} = V_{ist} (1 - cn^2) - V_0.$$

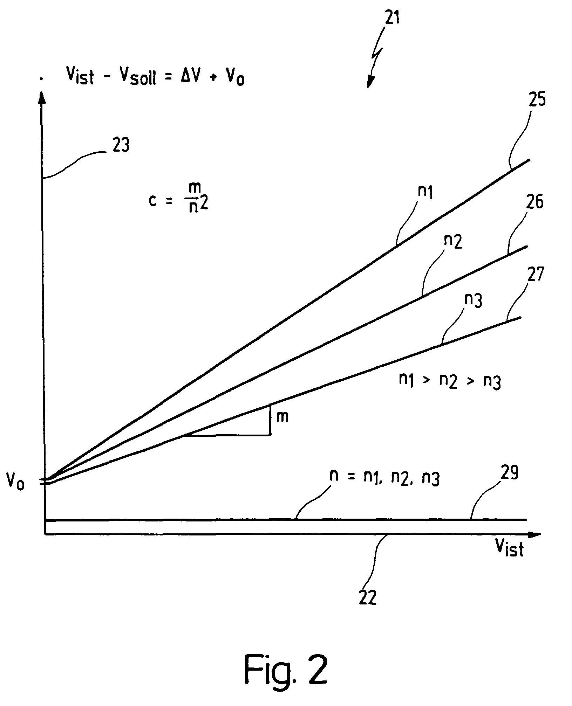

In Fig. 2 ist ein Meßdiagramm 21 dargestellt, das auf seiner unabhängigen Achse 22 den sich real einstellenden Wert $V_{ist}$ und auf seiner abhängigen Achse 23 die Differenz zwischen dem sich real einstellenden Wert $V_{ist}$ sowie dem vorgegebenen Soll-Wert $V_{soll}$ zeigt.

Für ein umkompensiertes Verfahren ergeben sich für unterschiedliche Drehzahlen n1 > n2 > n3 Meßkurven 25, 26, 27, die zeigen, daß die Abweichung bei größer werdender Drehzahl und/oder bei größer werdendem Abstand zunehmen. Alle drei Meßkurven 25, 26, 27 schneiden die Achse 23 bei in etwa dem gleichen Wert, der dem Umkehrspiel $V_0$ entspricht.

Aus den Steigungen m der Meßkurven 25, 26, 27 läßt sich die Maschinenkonstante c wie folgt berechnen:

$$c = \frac{m}{n^2}$$

Werden jetzt die Maschinenkonstante c sowie das Umkehrspiel $V_0$ so wie oben beschrieben verwendet, um den Soll-Wert $V_{soll}$ entsprechend zu korrigieren, so ergibt sich für sämtliche Drehzahlen n1, n2 und n3 die bei 29 gezeigte Meßkurve, die an einer Werkzeugmaschine ermittelt wurde, die mit dem neuen, kompensierenden Verfahren betrieben wird.

Die Ermittlung der Parameter c sowie $V_0$ muß lediglich einmal vor Inbetriebnahme einer neuen Werkzeugmaschine bzw. einer Werkzeugmaschine mit einem neuen Plandrehkopf durchgeführt werden, c sowie $V_0$ ändern sich für unterschiedliche Drehzahlen, Werkzeuge und radiale Abstände im wesentlichen nicht.

Die zur Bestimmung der Maschinenkonstante c sowie des Umkehrspiels $V_0$ erforderliche Testmessung wird in der Regel in einer Meßreihe durchgeführt, bei der für verschiedene Drehzahlen n die Differenz zwischen $V_{ist}$ und $V_{soll}$ aufgenommen wird, wie dies durch die Meßkurven 25, 26, 27 repräsentiert wird. Eigentlich wäre es ausreichend, nur eine der Meßkurven 25, 26, 27 zur Bestimmung der Maschinenkonstante c sowie des Umkehrspiels $V_0$ zu verwenden, wegen der unvermeidlichen Meßungenauigkeiten ist es jedoch vorteilhaft, wenn mehrere derartige Meßkurven aufgenommen werden, um die Maschinenkonstante c sowie das Umkehrspiel $V_0$ mit größerer statistischer Genauigkeit bestimmen zu können.

Die Bestimmung von $V_0$ sowie der Steigung m kann bspw. dadurch erfolgen, daß auf die Meßpunkte, die den Meßkurven 25, 26, 27 zugrundeliegen, eine Regressionsanalyse durchgeführt wird, die die beiden gewünschten Werte ergibt. Anhand der bekannten Drehzahl muß dann lediglich noch die Maschinenkonstante c durch die oben zuletzt angegebene Formel berechnet werden.

Das Meßdiagramm 21 aus Fig. 2 zeigt, daß die mit dem kompensierten Verfahren aufgenommene Meßkurve 29 deutlich unterhalb der Meßkurven 25, 26, 27 liegt und im wesentlichen parallel zu der Achse 22 verläuft. Während die Abweichungen bei den Meßkurven 25, 26, 27 im Bereich mehrerer 1/10 mm lagen, betragen diese Abweichungen bei der Meßkurve 29 nur noch ca. 0,03 mm, wobei das Umkehrspiel in einem Beispiel zu 0,07 mm bestimmt wurde.

**Patentansprüche**

1.  Verfahren zum Steuern einer Werkzeugmaschine (10), die eine mit einer variablen Drehzahl (n) um eine Spindelachse (15) rotierende Spindel (14) aufweist, die einen Plandrehkopf (16) trägt, der mit einem Werkzeug (17, 17') bestückt ist, dessen radialer Abstand (V) zu der Spindelachse (15) über eine Steuerung (13) verstellbar ist, wobei in Abhängigkeit von einer mit dem Werkzeug (17, 17') durchzuführenden Bearbeitung der Abstand (V) und/oder die Drehzahl (n) verändert werden,
    dadurch gekennzeichnet, daß zur Erzielung eines gewünschten Abstandes ($V_{ist}$) von der Steuerung ein Soll-Wert ($V_{soll}$) vorgegeben wird, der um einen Korrekturwert ($\Delta V$) kleiner ist als der gewünschte Abstand ($V_{ist}$), wobei der Korrekturwert ($\Delta V$) in Abhängigkeit von dem gewünschten Abstand ($V_{ist}$) und der Drehzahl (n) berechnet wird.

2.  Verfahren nach Anspruch 1, dadurch gekennzeichnet, daß der Korrekturwert ($\Delta V$) in Abhängigkeit von dem Quadrat der Drehzahl (n) berechnet wird.

3.  Verfahren nach Anspruch 2, dadurch gekennzeichnet, daß der Korrektur ($\Delta V$) nach folgender Formel berechnet wird:

    $$\Delta V = c \cdot n^2 \cdot V_{ist},$$

    wobei c eine Maschinenkonstante ist.

4.  Verfahren nach einem der Ansprüche 1 bis 3, dadurch gekennzeichnet, daß der Soll-Wert ($V_{soll}$) zusätzlich um einen weiteren, konstanten Korrekturfaktor ($V_0$) verringert wird, der dem Umkehrspiel bei Verstellen des Werkzeuges (17, 17') entspricht.

5.  Verfahren nach Anspruch 3 oder Anspruch 4, dadurch gekennzeichnet, daß die Maschinenkonstante (c) und/oder das Umkehrspiel ($V_0$) vor Aufnahme der Bearbeitung durch das Werkzeug (17, 17') einmalig aus einer Testmessung bestimmt werden.

6.  Verfahren nach Anspruch 5, dadurch gekennzeichnet, daß die Testmessung in einer Testreihe durchgeführt wird, bei der für unterschiedliche Drehzahlen (n) für verschiedene Abstände ($V_{ist}$) der erforderliche Soll-Wert ($V_{soll}$) bestimmt wird.

Fig.1

Fig. 2